# EUROPEAN PATENT APPLICATION

(11) **EP 1 220 128 A2**
(43) Date of publication of application: **03.07.2002**
(21) Application number: 01200572.4
(22) Date of filing: 19.02.2001
(51) Int. Cl.: G06F 17/60

(54) **Automated method and system for loan settlement**

(30) Priority: 26.12.2000 US 747010
(71) Applicant: Bocce CP, LLC, New City, New York 10956 (US)
(72) Inventor: Zappier, Paul, Rock Tavern, New York 12575 (US)
(74) Representative: Schmitz, Jean-Marie

(57) **Abstract**

This method of loan settlement is accomplished by providing automated document production through the Internet for all documents relating to a loan settlement, particularly a par loan trading settlement. Once the information is entered by the client and supplemented by the automated system, the system enables the buyer and the seller, on their business or home computers, to access such documents and information, immediately and in a secure and efficient manner. The system itself is accomplished easily by the use of state-of-the art hardware, software and Internet links. The system expedites closing, and is used, as well, for settlement of original loans, and/or loans for distressed entities.

## Description

### Field of the Invention

The field of this invention relates to a method and system for accomplishing and processing the settlement or closing of par loan trades, and more particularly relates to extensions of commercial credit as is originated by either financial institutions, insurance or financial companies and commercial lenders.

### Background of the Invention

The trading of par loans is in fact the secondary market for buying, selling, dealing, brokering and trading investment grade commercial loans and loan commitments at or approximately 100% of face value. Generally, the purchase price for this secondary market is between 94% and 102% of the loan.

During the past five years, the par-loan trading market has experienced exponential growth in the field of trades that today approximates a value of ninety billion dollars. Therefore, there is a great need to develop settlement and operational systems for such trades to accommodate this ever-increasing market in an efficient manner.

Prior to the present invention a par loan trade is typically settled in a manner that is highly labor-intensive and inefficient. The trader for the buyer and the trader for the seller begin the trade closing process by manually completing trade "tickets" at the respective institutions. Such "tickets" are provided to trading assistants, who input the trade information on the tickets into computer systems available at the respective institutions. Copies of the tickets are given to the respective institution's operations/closing unit, so that the seller's closer prepares a trade confirmation, which is faxed to the seller's trader for review and correction. The seller then executes the trade confirmation, returns it to the seller's closer and faxes it to the buyer's closer. The buyer's closer compares the confirmation to the buyer's ticket, and then either accepts the confirmation or corrects it, and in either event, faxes it to the buyer's trading desk for correction or further processing. The buyer's trader then faxes an accepted confirmation or a marked-up confirmation to the buyer's closer for faxing back to the seller's closer. Usually, this goes back and forth by fax until negotiations are completed and the buyer and seller agree to terms. The seller's closer then prepares a formal assignment, with information provided by the buyer and those working with the buyer. An agent then gets involved to provide funded and unfunded (for revolving credit lines) numbers to the respective parties, and reviews the assignment document (the form of which is attached to the credit agreement) for perhaps further changes by the seller's closer and refaxing to the buyer's closer. It is also the agent's job to contact the borrower prior to closing if the borrower's approval for the transaction is required. After approval by the agent or borrower, a funding memo is prepared by the seller's institution. The funding memo goes back and forth between the buyer and seller to obtain comments and corrections, and eventually it is signed, and the assignment is signed for exchange by fax. Eventually, funds are wired by the buyer's institution to the seller (for the purchase price) and to the agent (for the transfer fee). Each of the buyer, seller and agent must then gather, collate and store all transaction documents and adjust their respective inventories.

As may be seen, and as stated above, such a system for closing trades is highly inefficient and labor-intensive. It is therefore important to automate the system of par loan closings and record-keeping in order to increase the efficiency, increase the productivity enabled by the system, and to thereby provide the benefit of greater market liquidity therefor. This is especially true since the closers for each side of the transaction are compensated in the range of six figures, and it would be important to cut down the staff of people generally, who are necessary to close trades of this type. Still further, the above example of essentially non-automated trading of par loans normally settle such trades in ten or twelve days, whereas trades provided in the more automated manner of the present invention close in as little as three days. Under industry guidelines, if the par loan trade does not close within ten days, there is "delayed compensation", in the form of interest paid, usually from the seller to the buyer. If a distressed loan trade does not close within twenty days, there is "delayed compensation" in the form of interest paid from the seller to the buyer and the cost of carry is paid by the buyer to the seller. This increases market inefficiency and is largely eliminated by the invention method. Automation also provides an ease of document delivery by providing direct access to documents on the system at any time. Mistakes are also avoided by generating automatically the global credit sheet (which tracks the status of each component of the loan), the trade confirmation, the assignment and the funding memo necessary to complete the trade.

### Objects and Summary of the Invention

Accordingly, a primary object of the present invention is to automate, and thereby reduce labor-intensity for processing the closing/settlement of par loan trades.

A further and more particular object is to provide a system and a method for processing par loan settlements/closings to thereby enable greater market liquidity in such trading transactions.

A still further object of the present invention is to provide a system and a method for par loan settlements/closings in order to enable the completion of such trades in approximately three business days (this being the equivalent of the mandated closing time for trades in the U.S. and international bond markets), in part by providing an ease of document production and delivery with direct access to documents involved in the trade at any time, which also avoids mistakes in the final documentation for the trades. The present invention method also involves the storage of documents and record-keeping in the database of the system under the par number assigned to each closing to which it pertains, which allows the system participants to track the loan inventories and evidences of the transaction.

Other objects and advantages of the present invention method are provided in a system which features the use of present state-of-the art hardware, but custom-integrated with computer software to establish a secure and high-speed method to process and settle par loan trades. The method requires each user of the system to be pre-registered with a user name and password, and an electronic secure identification card (optional), all part of the secure identification system used in this method. All trade data is exported to or imported from most system platforms (i.e. to customer databases), with applications and program modules that are totally scaleable and can be customized as required to meet changing industry standards and customers' specific requirements. For instance, third party interfaces are established and implemented to meet customer specific requirements, without disturbing the integrity of the system. The method works most efficiently when a system organizer entity provides personnel, with one employee acting as the closer for the seller and the buyer, and the entity itself providing the basic and central hardware in a secure, redundant system on the entity's premises. Furthermore, the coordinating entity provides an administrator, whose mission is to audit and maintain, on a sustained basis, all global loan information and credit requirements needed to process the trades. The global administrator, working with attorneys for the system, audits the credit document for each loan for minimum and maximum trade amounts, whether the transfer must be pro-rata among tranches, if the tranfer must be made to an elligible assignee, etc., and maintains the credit requirements for each customer and loan, and updates and records all global loan information, working directly with the customer and the agent. Additionally, the global administrator manages the workload and assigns all submitted trades to the proper closer for processing purposes. On the other hand, the closer, usually an employee of the central entity, processes all trades assigned by the global administrator and expedites the collection of trade closing information, as required. In this way, the closer expedites the confirmation for each trade submitted, expedites the assignment and acceptance for each trade, correcting and notifying the participants if there are any data errors. The closer also expedites the funding memo, verifying that all related numbers are current and correct, closing the trades and electronically submitting trade information for review and payment. Lastly, the closer maintains the trade status form for trade time cycle information.

More specifically, when a user logs on to the present invention system, encrypted access to the system is granted and the user dataset is created and the multi-user interface confirms to the user's role in the process. Using MICROSOFT (a registered trademark of Microsoft Corporation), a custom graphical user interface is created as a MICROSOFT access project using SQL Server 7 as a data source. The network requirements, in addition to SQL Server 7, involves the use of WINDOWS 2000 (also a registered trademark of Microsoft Corporation), a Cytrix Terminal Server and MsAccess 2000 (both of which are also registered trademarks).

Thus, when the system is launched, the user's roles may be either as an administrator or a closer from the entity coordinating the system, the trader of the buyer or the seller, another employee of the buyer or the seller, or an agent. As stated previously, many users can access the system at one time, with no degradation in performance. When a new trade is submitted, the proposed closing date for a par trade (usually three days) is automatically calculated according to banking business days, with the calculation for the closing date extending out to ten days for accurate forecasting, if the trades do not close within the proposed and usual three day time period. Each trade is automatically assigned a unique tracking number for ease and quick reference to access trades and trade status, and for inventory control and record-keeping purposes. The valid users can access the login screen from any typical browser. By clicking on a hyperlink from the web site, instant customer specific trade status is displayed. The system automatically notifies a global administrator (from the central entity) when a new trade is posted, who then assigns the trade to specific closers for processing. The system automatically routes the trade to the proper personnel to review documents and status, with pop-up functions for comments and remarks also being tracked and routed to the proper personnel.As the trade progresses through the settlement process, the related users for the transaction are automatically notified of such progress via encrypted e-mail. The e-mail message is sent immediately as the users complete each step. Also, the system itself automatically senses who is logged into the system, and inserts their user initials and time and date for any input to the system, as the trade is moved through to the settlement process. Required field data is audited before a trade is moved to the next stage in the process. Depending upon the pre-defined role of the user, screens, command buttons and field editing is enabled or disabled, as required, to thus increase the integrity of the data entered.

As a pre-defined authorized, system member, the user gains online access to draft the trade documents (editable) and final (fixed image) documents or tranche inventory via the central web site (the central entity). The user need not be the one who launched the system activity to get this data.

Advantageously, with the system and method of the present invention, each user has the ability to create custom reports related to their complete trade history, status and positions based on a dynamic criteria entered during the running time for the system. The system maintains on a sustained basis all global facility amounts and contracts under each facility in order to automate the settlement process for each trade submitted to the system. Pull-down lists are used to populate the required field data to eliminate typos and redundant data entry, thereby increasing accuracy to speed to settlement. The system dynamically updates all controls during the running time as data is changed or added to the source tables. No program changes are required to maintain the control selection lists. The system provides all users with the ability to produce related documents and information for review or print. The system includes coding behind each form to process the data selected from the pull-down lists, with such data used within the trade process to generate the closing figures based upon the global information to settle a trade. The controls insert customer contact information for each credit, buyer and seller for each trade. Also, the system processes and displays tranche inventories for each member as trades are opened and closed for both buys and sells. Changes to inventory are made for permanent commitment reductions and/or permanent pay-downs, and revolving loan activity is tracked as well. Each data entry is validated during input to insure data integrity for all field types within each form of the system. Restricted data fields are enabled or disabled according to the user's pre-established role as a member of the system, in order to protect the integrity of the form data entered or modified. The system calculates all required formulae in order to provide the funding memo with the proper payment amounts for each trade. This would include automatic calculation of "delayed compensation" when necessary. Furthermore, the system tracks each specific credit which a closer works on, and suggests lists of typical closers with a history on that credit. Additionally, the system displays a work list for the selected closer and notifies the administrator when a closer is over-allocated. This efficiently distributes the workload to expedite the settlement process where possible.

Therefore, an automated system of settling the loan transaction by use of a computer system is provided, in which each user of the system is pre-registered with a secure designation and credit information, whereby an electronic trade ticket, including trade data is inputted to the computer system. The CLEAR PAR system checks the credit requirements and a closer for the system is assigned to the trade for reviewing the trade ticket data, so that the system automatically creates a trade confirmation document using that data, and other information, if necessary. The system prints the trade confirmation document from the trade confirmation creator document data and information. The closer for the system then contacts the buyer and the seller by e-mail to review the trade confirmation document, and the system adds the new trade to the buyer's and seller's open inventory reports and complete inventory report. The trade confirmation document is then revised by the system, after which it is signed by both the buyer and the seller. The system then automatically completes an assignment and acceptance agreement and a funding memorandum, based upon the finalized trade confirmation document to settle the transaction.

The system tracks and documents all trades submitted to it, and stores that history into a comprehensive database for tracking of inventory and future tracking of past transactions and positions of trades processed for each credit, buyer and seller.

### Brief Description of the Drawings

Other objects, features and advantages of the present invention will become apparent by reference to the following detailed description of the preferred, but nonetheless illustrative, embodiment of the present invention method, with reference to the accompanying drawings, wherein:
FIGS. 1 and 2 represent a block flow and data flow diagram illustrating the system and the process required for the system to complete a trade, as well as to show accountability for each task process involved in the trade life cycle;
FIG. 3 is an Electronic Trade Ticket for an illustrative and typical first trade accomplished with the present invention method.
FIG. 4 is a Trade Confirmation Creator document generated on the data processing system of the present invention method, using illustrative data in that typical first trade pursuant to the Electronic Trade Ticket of FIG. 3.
FIG. 5 represents as with FIGS. 3 and 4, an Assignment and Acceptance Creator document generated by the present invention method for the typical first trade.
FIG. 6 is the Funding Memo Creator document for the illustrative first trade pursuant to FIGS. 3, 4 and 5 as described in the foregoing.
FIG. 7 is an Electronic Trade Ticket for an illustrative and typical second trade accomplished with the present invention method.
FIG. 8 is a Trade Confirmation Creator document generated on the data processing system of the present invention method, using illustrative data in that typical second trade pursuant to the Electronic Trade Ticket of FIG. 7.
FIG. 9 represents as with FIGS. 7 and 8, an Assignment and Acceptance Creator document generated by the present invention method for the typical second trade.
FIG. 10 is the Funding Memo Creator document for the illustrative second trade pursuant to FIGS. 7, 8 and 9 as described in the foregoing.
FIG. 11 is a typical Trade Time Line document for a typical trade/closing/settlement accomplished by the present invention method, as shown in FIGS. 3-6.

### Detailed Description of the Preferred Embodiment of the Invention Method

As stated, the present invention presents a method using available hardware in a unique, custom-integrated arrangement with computer software to establish a secure, high-speed method to process and settle par loan trades. Various user types can be defined as a network administrator, a trader, a buyer, a seller, a global administrator, a closer and an agent.

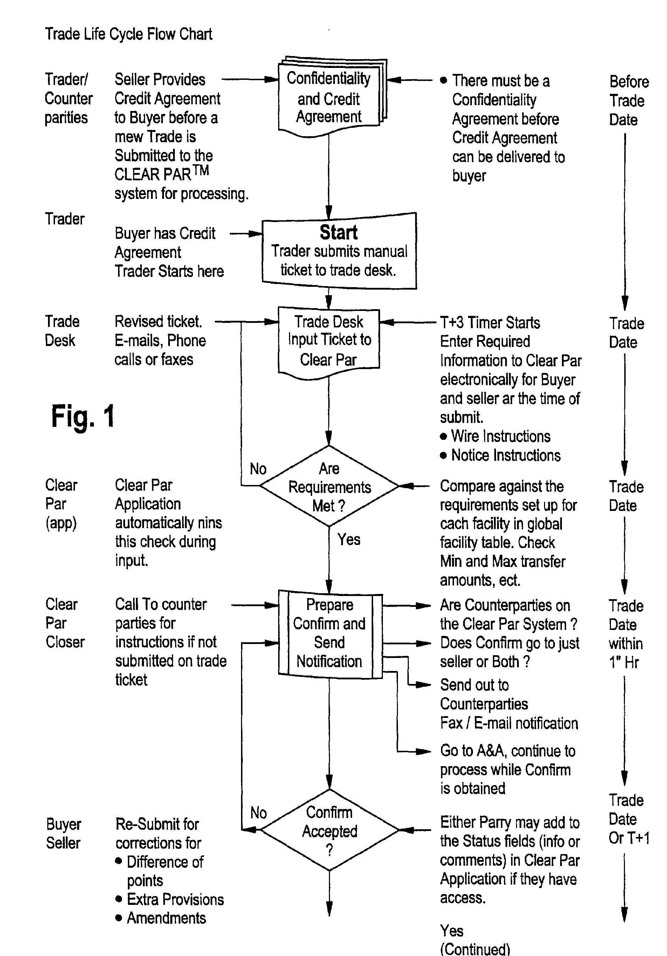

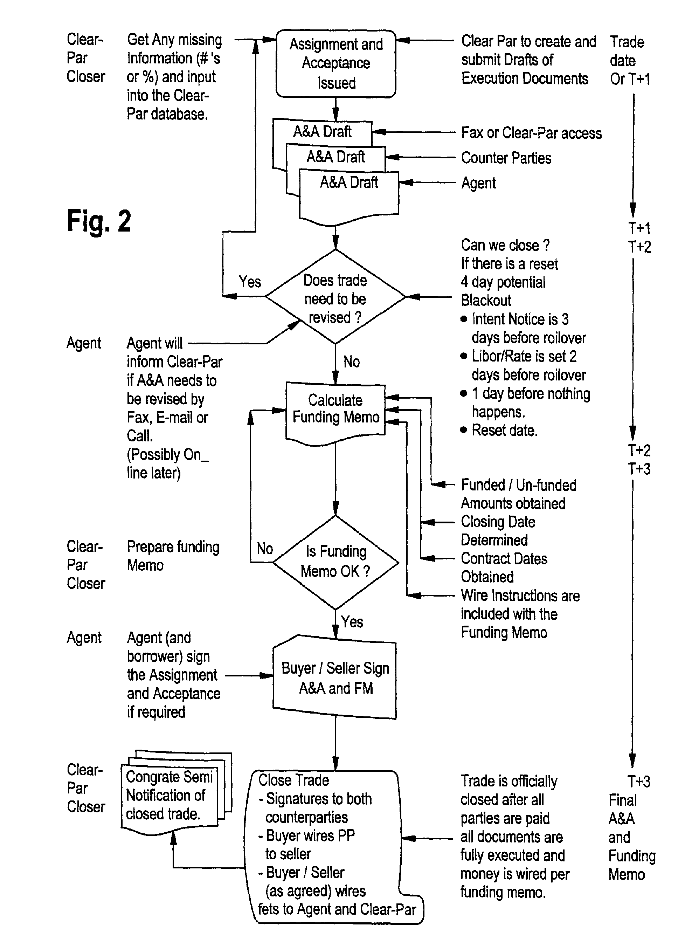

Referring to FIGS. 1 and 2, the actions by those involved in the various rules, as stated above, are shown, the system itself being referred to as the CLEAR PAR system, for ease of identification. As shown in FIG. 1, the user logs on to the CLEAR PAR system, and particularly requests access to the CLEAR PAR electronic trading application, which is the interface for the system. Preliminarily, the seller must provide a credit agreement to the buyer (unless the buyer already has it) and this requires a confidentiality agreement between the buyer and the seller. To commence a trade closing in the system, the trader inputs a trade ticket into the CLEAR PAR system, or manually writes a ticket and then submits the manual ticket to the trading desk, and the trading desk inputs the ticket to the CLEAR PAR system. The logging on to the system, providing access to the interface when such access is granted, triggers the user dataset creation, and the interface confirms the user's role, which in this case is either the trader or another employee of the seller or the buyer.

When a new trade is submitted, the T+3 day (i.e. the trade date plus three business days) proposed closing date is automatically calculated, using banking business days only in the count. The calculation extends out to T+10 days and beyond, in the event that trades do not close within the three day time period. Also, each trade is assigned a unique tracking number for quick reference for a number of reasons, including access to the trades and the trade status, and record-keeping post-closing. As the trade progresses through settlement, all related users are automatically notified of the progression by means of encrypted e-mail (which notices are duplicated on the trade status screen of the site), as each step is completed or input is made to the system.

After the trade ticket is submitted, the system determines whether all requirements have been met and revises the ticket, and notifies parties, as the need arises. The interface of the system automatically notifies the global administrator, who assigns the trade to a specific closer for processing. The interface automatically routes the trade to the proper personnel for review of documents and status; and popup functions for comments and remarks are tracked and routed to the proper personnel. The interface also senses who is logged into the system, inserts user initials, time and date, or a combination of identifications, as the trade moves through to the settlement. Field data is audited before the trade moves from one stage to the other and the requirements are compared against the requirements set up for each facility in a global facility table; e.g. checking the minimum and maximum transfer amounts and other data.

If the seller and buyer have not instructed for a proper complete filling out of the trade ticket, they are asked for instructions by the closer. Eventually, but probably during the first hour after the T+3 setting, a check is made whether both parties, buyer and seller, are part of the CLEAR PAR system. Trades are done by the CLEAR PAR system, only if the buyer and the seller are both members. In any event, having gone this far, a trade confirmation and notification thereof is sent, accepted or corrected and resubmitted, leading to the acceptance of confirmation, all during the first day after the trade is started.

As shown in FIG. 2, after confirmation acceptance, an assignment and acceptance is prepared as coordinated by the closer; and then drafts are prepared (probably still during the first day after the institution of the trade), leading to revisions, finalization of the assignment and acceptance and eventually, the production and calculation of the funding memo for the trade. During the second and third days after inception of the trade, the funding memo is further calculated, revised, finalized and all documents are prepared for final signing by the buyer and the seller. The signatures and payments are then readied for full settlement three days (banking days) after the inception of the trade.

During the process, each user has the ability to create custom reports of trade history, status and positions, based upon a dynamic criteria entered during the running time; and particularly because of the system's record-keeping and document storage capability. In any event, the trade is official closed after all parties are paid, all documents are fully executed and money is wired per the Funding Memo, all of which takes place after the final assignment and acceptance, and the funding memo is issued and signed.

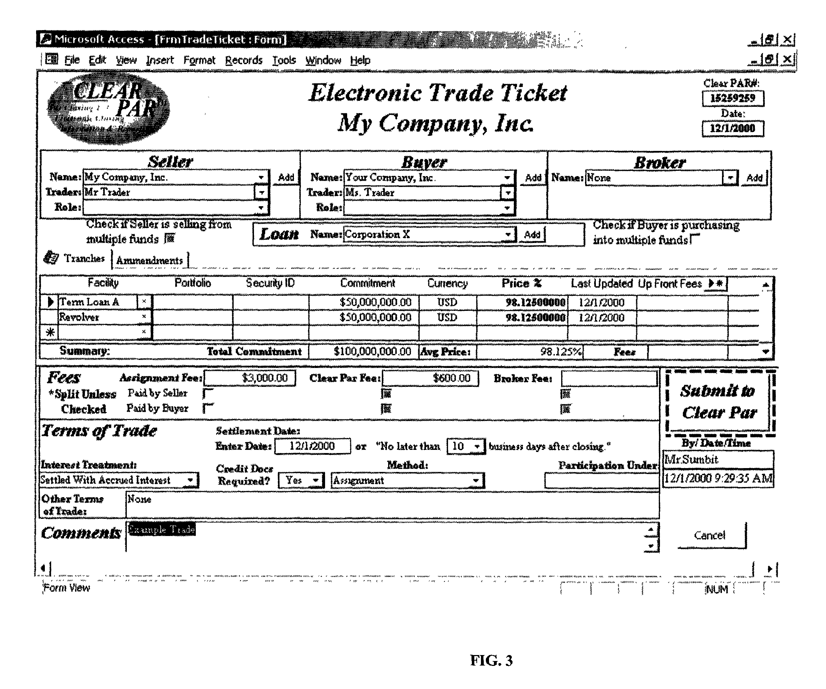

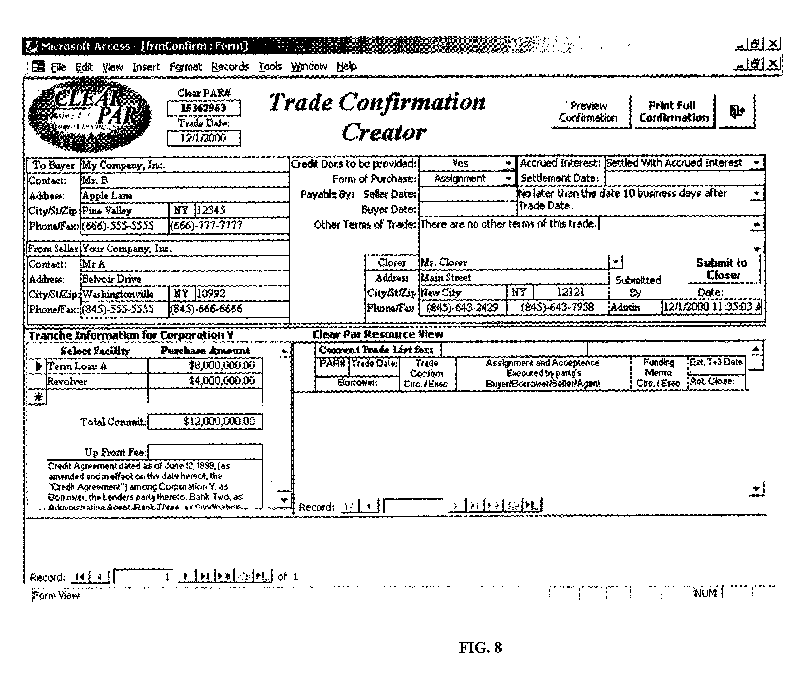

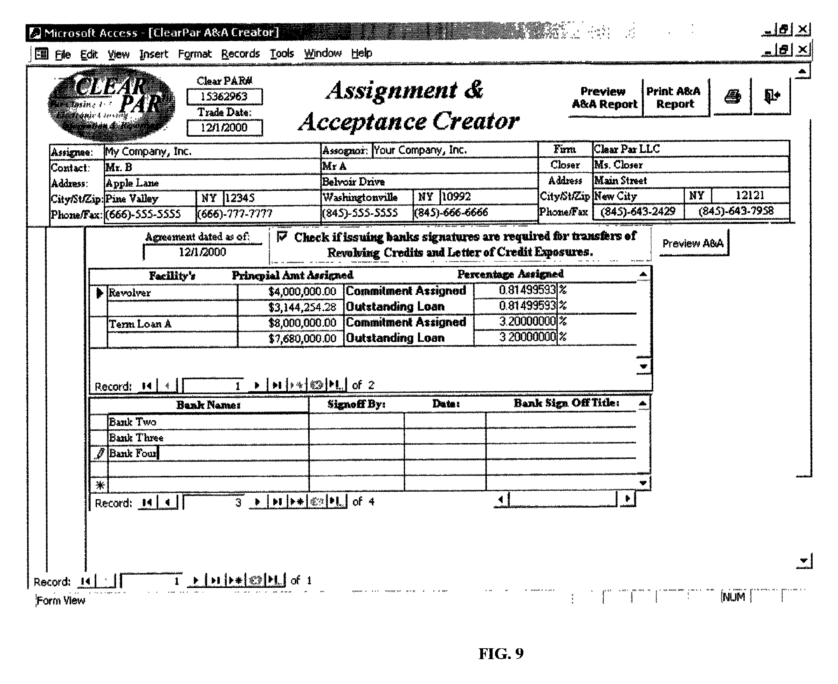

In order to provide a more complete description and understanding of the present invention, a typical pair of trades (fictitious in order to protect the participants) will now be described, with reference to FIGS. 3-10.

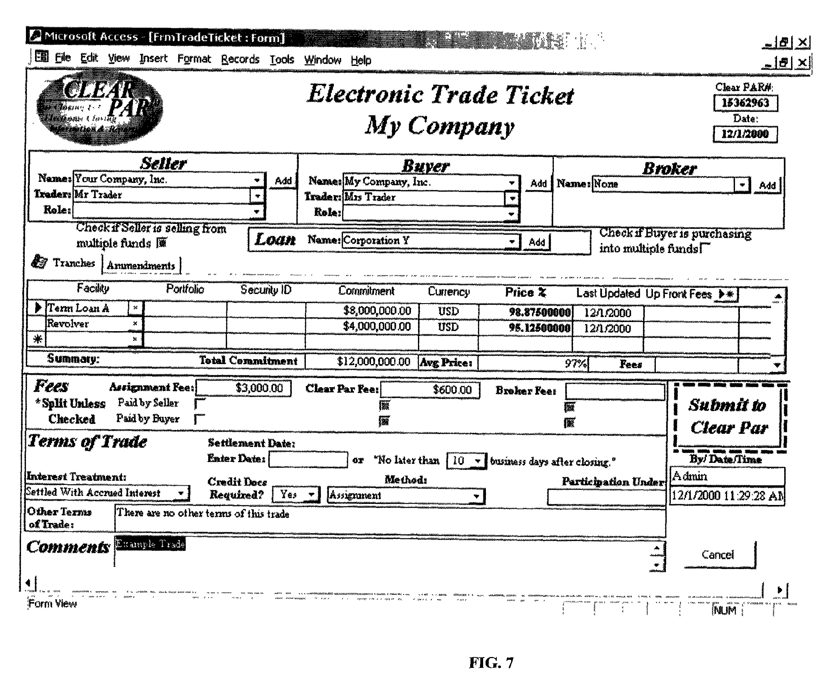

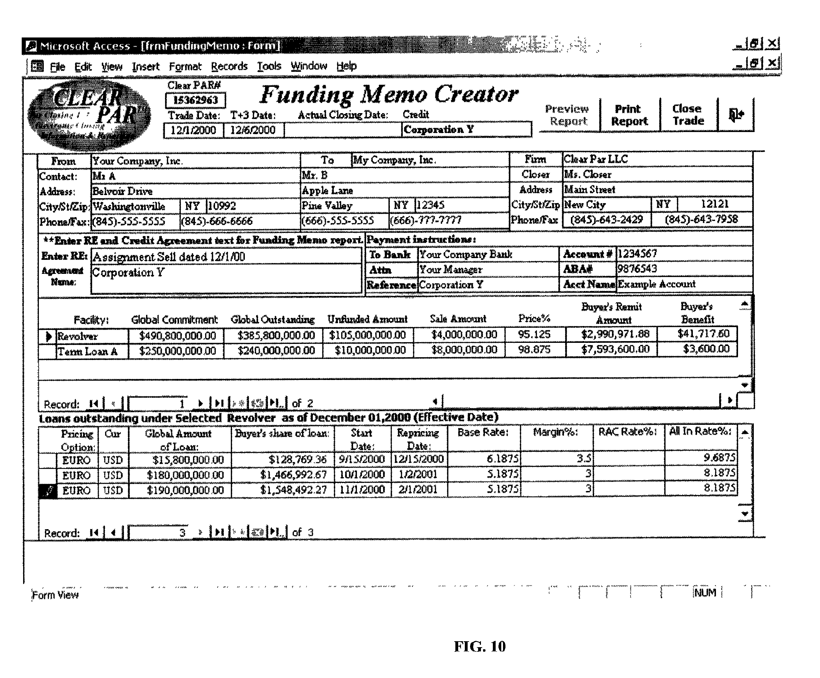

In the second of these trades, the Electronic Trade Ticket used in the invention method is designated FIG. 7, which shows a trade wherein the predominant element is actually shown on the Funding Memo Creator document of FIG. 10. Briefly, FIG. 10 shows an unfunded amount of $10,000,000.00 for the term loan and an unfunded amount of $105,000,000.00 for the revolving credit line, both thereby affecting the Funding Memo created from the Funding Memo Creator to show the actual closing amounts of the transaction. In this sample trade, therefore, the buyer obtains a credit in the purchase price for the unfunded portion of the transaction. Any additional information regarding funding can be added to the Funding Memo Creator and/or to the Funding Memo directly.

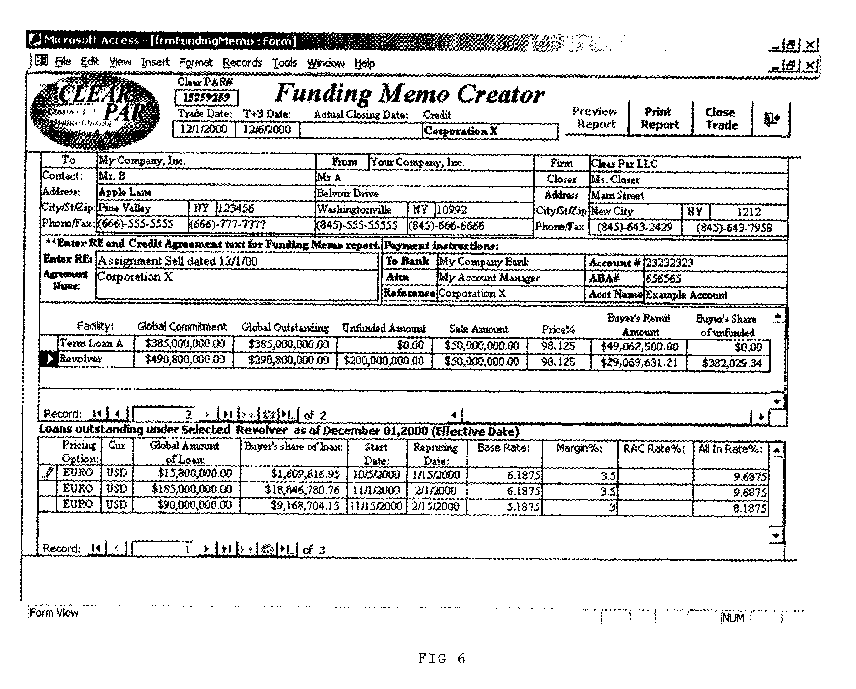

The Electronic Trade Ticket of FIG. 3 represents the first sample trade (FIGS. 3-6) wherein the element of funding differs from the example represented in FIGS. 7-10. This is particularly shown in the Funding Memo Creator (FIG. 6), wherein it may be seen that the term loan is fully funded, and the revolving credit commitment is $50,000,000.00, of which $29,625,101.87 is funded and the remainder is unfunded. This is based on the revolving credit commitment, which has an unfunded amount of $200,000,000.00. This is the more typical situation than the FIG. 10 unfunded term loan commitment.

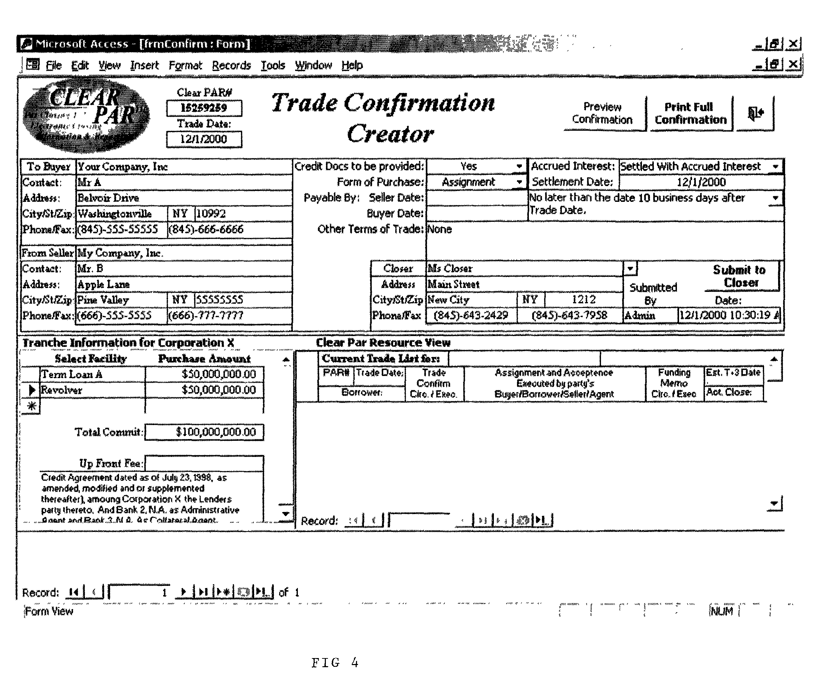

Briefly, going through the steps of the method for the first sample trade, as it flows through the drawings of FIGS. 3-6, the trade is initiated by an Electronic Trade Ticket, which has been manually inputted by the client, arriving at the Clear Par system, where the Electronic Trade Ticket is used as an input to all parts of the system, and the timer for the trade begins a T+3 period within which the trade is expected to be completed. The data of the Electronic Trade Ticket is compared against the requirements set up for each facility in the global facility table already within the automated system. Therefore, whether or not the requirements are met is determined by the system at the time of the input of the Electronic Trade Ticket. If necessary, revisions are made until a Trade Confirmation Creator can be finalized with data sufficient for producing a trade confirmation agreement, all these being shown in FIG. 4.

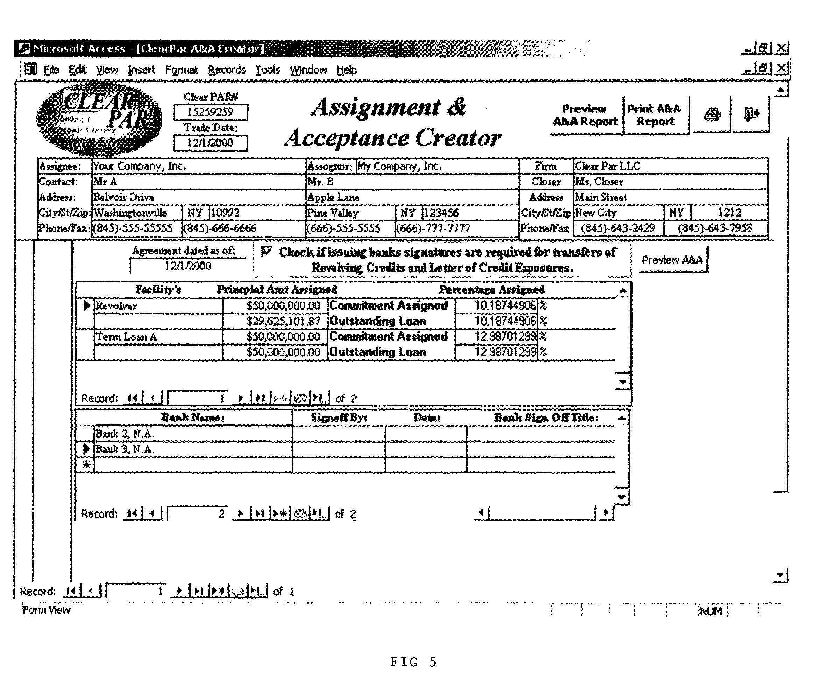

The confirmation document generated from FIG. 4 is confirmed by the seller and the buyer; and then the confirmation agreement is accepted (electronic signatures are an option in the system). If accepted, the next step is shown in FIG. 5, wherein the Assignment and Acceptance Creator generates an assignment and acceptance document (FIG. 2), which is, of course, accessible by those involved in the transaction and amenable to corrections, additions or other changes so that the Funding Memo Creator (FIG. 6) can produce and calculate the funding memo to indicate the closing terms and costs, after which time the assignment and acceptance documentation and the funding memo are signed by both the buyer and the seller (FIG. 2).

In terms of the FIGS. 7-10 transaction, the flow of the method, using this invention, is similar, since it appears from the demonstration (FIGS. 3-10) that both example trades are instituted by the seller, with the buyer and the seller both being clients or customers of the CLEAR PAR system. Nevertheless, the Funding Memo Creator (FIG. 10) of the second sample trade is quite different, in terms of both the unfunded amounts listed in the center of FIG. 10, and the funding memo generated by the Funding Memo Creator, in terms of closing costs, where the buyer gets credit in the purchase price pursuant to FIG. 10 for the unfunded portion of the loan.

As may be seen from the foregoing, with hardware presently in existence, but custom-integrated with computer software to establish a secure, high-speed method, Par Loan trades are efficiently processed and settled. Of course, the invention method works optimally when both the buyer and the seller are clients and customers of the CLEAR PAR system. Thereby, both would have a designation and password for enabling and accessing the system and the documents generated thereby. More specifically, the system is enabled primarily when a coordinating entity (CLEAR PAR system entity) oversees the various steps as the system operates with the invention method.

The system is also enabled by credit documents being on file or put in files for auditing at the time of each trade and for establishing minimum and maximum trade amounts, credit data and requirements. The entity providing the administrator expedites the collection of the global numbers, as required, and in addition, the administrator expedites the confirmation of each trade, as well as the assignment and acceptance by the counter-parties for each trade, also handling the collection of and the notifying of the participants when errors occur in the data collected. On a continuous basis, the closers work with the others involved in the trade to continuously generate trade time cycle information.

It may also be seen from the drawings referred to herein, that many users can access the system at any one time, with no degredation in performance. Accordingly, the proposed three day time schedule for each trade is usually met. Further, on a secure basis, not only access to the specific trade documents is within the capability of the system, but also progress of the transaction is enabled via e-mail and web-based status bar for the trade. As each step is completed, those involved in any specific trade are able to inform themselves prior to final approval via e-mail, so that changes can be made in a timely manner.

The system automatically senses who is logged into the system and required field data is audited continuously as each trade is moved through to the next stage in the process.

It is also an advantage and a feature of the present invention method that each user thereof creates custom reports related to that user's complete trade history, status and positions. Pull-down lists are used to populate the required field data to eliminate errors and make data entries redundantly; and all users, if they desire, can produce and reproduce related documents for reviewing purposes or printing purposes. Each data entry is verified during input to insure data integrity for all field types within each stage and conform to the system. Restricted data fields are enabled or disabled according to the user's role in the system, in order to protect the integrity of the form data entry to the system and/or modified thereafter. Still further, the system tracks each specific credit which a closer works on, and suggests from lists of typical closers, who have a history of that type of credit. The administrator of the system is notified immediately when a closer is, or is close to being over-allocated, in order to efficiently distribute the workload.

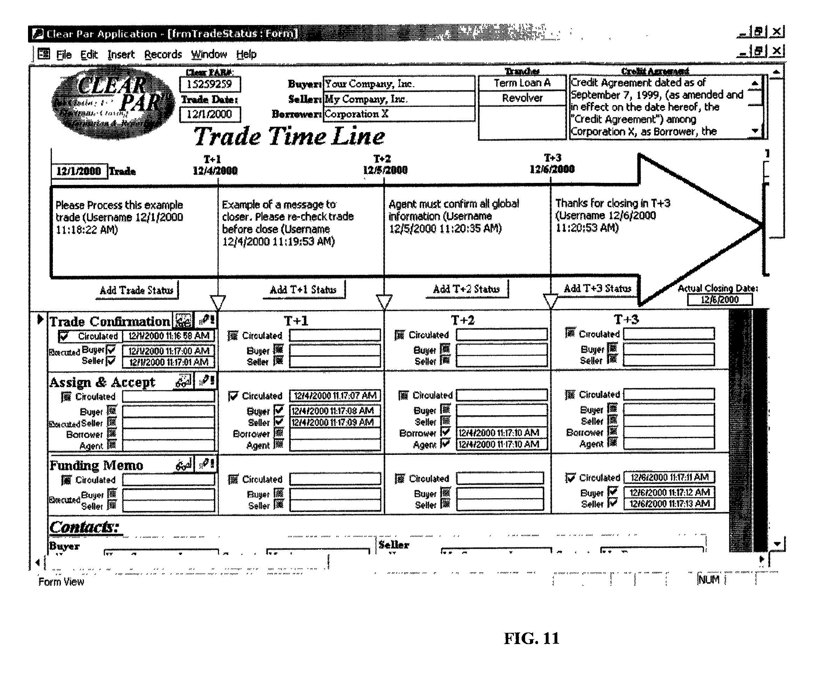

The Trade Time Line document of FIG. 11 is used, for example, in the present invention method to enable the administrator, the buyer and/or the seller to make comments or to reflect the status throughout the life of the trade involving the corporation X (see FIG. 3) debt. This is linked to the e-mail function described earlier herein.

The present invention method is also used for the settlement of original loans (upon syndication) and/or loans for distressed entities.

In terms of further details of requirements and features of the present invention method, using the CLEAR PAR system, the following is provided:
A lender may assign to one or more assignees all or a portion of its rights and obligations under a Credit Agreement provided that the transfer meets certain requirements. The specific requirements vary by credit but the following are examples of requirements to be met:
   1. Except in the case of an assignment to an existing lender or to an affiliate of an existing lender, or an assignment of the entire remaining amount of the assigning lender's commitment or loans, the amount of the commitment or loans to be assigned by the assigning lender shall not be less than $5,000,000.00 in aggregate. This essentially means that there is a minimum amount that can be transferred. A seller could not transfer e.g. $4,999,999.99 to a buyer. The system would alert the users.
   2. The transfer can only be made to an Eligible Assignee. An example of a definition of Eligible Assignee is (i) a commercial bank organized under the laws of the U.S., or any state thereof, and having a combined capital and surplus of at least $100,000,000; (ii) a commercial bank organized under the laws of any country which is a member of the Organization for Economic Cooperation and Development (the "OECD"), or a political subdivision of any such country and having a combined surplus of at least $100,000,000; provided that such bank is acting through a branch or agency located in the U.S.; (iii) any affiliate or any Related Fund of a lender; (iv) any other entity which is an "accredited investor" (as defined in Regulation D under the Securities Exchange Act of 1934, and regulations promulgated thereunder) which extends credit or buys loans as one of its businesses, including insurance companies, mutual funds and lease finance companies; or (v) any other entity approved by the borrower and the administrative agent; provided that neither the borrower, any other affiliated group member nor any employee benefit plan subject to ERISA shall be an Elligible Assignee. The applicable definition of Eligible Assignee will be included so that the CLEAR PAR client will be able to determine if the buyer will be approved as a lender.
   3. Certain transfer provisions include "minimum holds"; e.g. if the transferring lender (the seller) does not assign the full amount of its commitment, then the balance which the transferring lender must maintain in the credit is an amount equal to e.g. $10,000,000.00. The system would be able to alert the seller as to a violation of this provision, if CLEAR PAR is maintaining the inventory levels of the seller.
   4. The transfers must be pro-rata, meaning that if global Term Loan A represents 20% of the entire credit, Term Loan B represents 30% of the entire credit and the Revolving Credit is 50%, then the commitment which the seller is transferring must be divided as follows: 20% Term A, 30% Term B and 50% Revolving Credit. The system automatically checks sale amounts for pro-rata treatment.

Another feature is that if there is a global reduction in the credit between the trade and settlement date, the CLEAR PAR system will provide for a proportionate reduction in the amount of the commitment that is being sold. In addition, proportionate reductions will be made to each individual purchase in the inventory status sheets so that the CLEAR PAR clients will know the amounts which they have available for sale.

The system includes a net-off feature. This will be used when Party A sells to Party B and Party B sells the same commitment/loans to Party C. It is a three-way letter with two schedules attached; one reflecting the payment from Party B to Party A and the second reflecting the payment from Party C to Party B. The Assignment and Acceptance Agreement will be by and between Party A and Party C. Party B never becomes a lender of record.

The foregoing and the drawings attached hereto describe the method according to the present invention, but the invention is to be limited only by the following claims:

## Claims

1. An automated method of settling a loan transaction by use of a computer system, in which each user of the system is pre-registered with a secure designation and credit information, comprising the steps of:
(a) inputting to the computer system an electronic trade ticket including trade data;
(b) reviewing said trade ticket data and preparing a trade confirmation document, through a trade confirmation creator, using said data and adding information, if necessary;
(c) printing the trade confirmation document from the trade confirmation creator document data and information;
(d) contacting the buyer and the seller for the transaction by e-mail to review the trade confirmation document;
(e) adding the data and information relating to the transaction to the buyer's and seller's inventory reports for the credit information of each;
(f) revising, if necessary, said trade confirmation document, based upon comments from said buyer and seller;
(g) arranging for signing of said trade confirmation document by said buyer and said seller; and
(h) thereafter producing and arranging for signing of an assignment and acceptance agreement and a funding memorandum, based upon a finalized trade confirmation document, in order to settle the transaction.

2. The method according to claim 1 wherein following said revising step, the step of re-submitting said trade confirmation document to said buyer and said seller for review is performed.

3. The method according to claim 1 wherein the step of reviewing said buyer's and said seller's inventory reports is performed just prior to the ultimate step thereof, in order to revise said funding memorandum, if necessary.

4. The method according to claim 1 wherein, following the ultimate step thereof, the step of notifying said buyer and said seller of the effectiveness and settlement of said transaction is performed.

5. The method according to claim 4 wherein, following the step of claim 4, the step of receiving payment from said buyer is performed.

6. The invention according to claim 5, wherein, thereafter the step of adjusting the inventory reports of said buyer and said seller is performed.

7. A system for settling a loan transaction, in which each user of the system is pre-registered with a secure designation and credit information, comprising:
(a) a computer system;
(b) an electronic trade ticket (FIG. 3) for initiating the trade method as an input to said computer;
(c) a timer, which begins a three day period on the computer, within which the trade is expected to be completed;
(d) means for comparing the data of the electronic trade ticket against the requirements set-up in the computer;
(e) a trade confirmation creator which incorporates revisions made by the computer to the electronic trade ticket and which creates a confirmation document for confirmation by the users of the system;
(f) an assignment and acceptance creator for generating an assignment and acceptance document (FIG. 2) for accessibility by the users of the system;
(g) a funding memo creator for calculating and producing a funding memo to indicate the closing terms and costs for the users of the system; and
(h) said assignment and acceptance document and said funding memo for signing by said users.

8. The system according to claim 7, wherein said system is:
(a) **characterized by** a global reduction credit feature included for informing the users the amounts of loans which are available for sale during any transaction performed by the system.

9. The system according to claim 7, wherein said system is:
(a) **characterized by** a net-off feature in the system, for accommodating three part transactions performed by said system.

10. The system according to claim 7, wherein said system is:
(a) **characterized by** an assignment feature included in said system whereby a lender assigns to one or more assignees all or a portion of its rights and obligations for a transaction performed by said system.
